# EUROPÄISCHE PATENTSCHRIFT

(11) **EP 1 791 732 B1**
(45) Veröffentlichungstag und Bekanntmachung des Hinweises auf die Patenterteilung: **11.08.2010**
(21) Anmeldenummer: 05754526.1
(22) Anmeldetag: 07.06.2005
(51) Int. Cl.: B60S 1/08, G01N 21/45

(54) **VORRICHTUNG UND VERFAHREN ZUM PRÜFEN EINES OPTISCHEN REGENSENSORS**
DEVICE AND METHOD FOR TESTING AN OPTICAL RAIN SENSOR
DISPOSITIF ET METHODE POUR TESTER UN CAPTEUR OPTIQUE DE PLUIE

(30) Priorität: 22.06.2004 DE 102004030191
(43) Veröffentlichungstag der Anmeldung: 06.06.2007
(73) Patentinhaber: ROBERT BOSCH GMBH, 70442 Stuttgart (DE)
(72) Erfinder: GRASS, Ansgar, 77746 Schutterwald-Langhurst (DE); FIESS, Reinhold, 77770 Durbach (DE); WOLF, Frank, 77815 Buehl (DE); MANNHARDT, Mathias, 77871 Renchen-Ulm (DE); PACK, Andreas, 77815 Buehl (DE)
(86) Internationale Anmeldenummer: PCT/EP2005/052603
(87) Internationale Veröffentlichungsnummer: WO 2005/123470

(56) Entgegenhaltungen:
- US-A- 5 898 183
- US-A- 5 990 647
- PATENT ABSTRACTS OF JAPAN Bd. 014, Nr. 504 (P-1127), 5. November 1990 (1990-11-05) & JP 02 210241 A (FUJITSU TEN LTD), 21. August 1990 (1990-08-21)

## Beschreibung

Die Erfindung betrifft eine Vorrichtung und ein Verfahren zum Prüfen eines optischen Regensensors, insbesondere eines optischen Regensensors zur Anwendung in einem Kraftfahrzeug.

Bei heutigen in Kraftfahrzeugen eingesetzten Regensensoren wird meist ein optoelektronisches Prinzip zur Regendetektion verwendet. Ein solcher Regensensor weist üblicherweise eine Lichtquelle, einen Fotodetektor sowie ein Lichtleitelement auf. Der von der Lichtquelle abgegebene Lichtstrahl wird in das Lichtleitelement eingekoppelt. Der Regensensor wird mithilfe z.B. einer transparenten Klebefolie an einer Windschutzscheibe befestigt, so dass Licht aus dem Lichtleitelement in die Windschutzscheibe eingekoppelt wird und an der Außenfläche der Windschutzscheibe unter anderem durch Totalreflexion reflektiert wird. Der reflektierte Lichtstrahl wird zurück über dasselbe oder ein weiteres Lichtleitelement in Richtung des Fotodetektors gerichtet. Befindet sich auf der Scheibenoberfläche ein Wassertropfen, wird an dieser Stelle der Außenfläche der Lichtstrahl ausgekoppelt, und die Lichtstärke, die den Fotodetektor erreicht, vermindert sich entsprechend. Diese Verminderung der Intensität wird bewertet und dadurch Regen oder Beschlag auf der Windschutzscheibe erkannt.

Um die Funktionsweise des beschriebenen Regensensors zu prüfen, ist bereits ein Prüfverfahren bekannt, bei dem der Regensensor auf einer Prüfscheibe aufgebracht wird und die Transmission der optischen Kanäle bewertet werden. Weiterhin ist ein Vermessen der sensitiven Flächen mithilfe eines Silikonstempels bekannt, der den Weg des Lichtstrahls, der von der Lichtquelle ausgesendet wird, in definiertem Maße beeinflusst, so dass man über eine Änderung der Messgröße zwischen dem Zustand vor dem Aufsetzen des Silikonstempels und bei aufgesetztem Silikonstempel einen Anhaltspunkt für die Funktionsfähigkeit des Regensensors erhält.

Aus der US 5,898,183 ist ein Regensensor bekannt, welcher ausgebildet ist, um ein Maß von Feuchtigkeit durch Bestimmen eines reflektieren Anteils eines Lichtstrahls zu ermitteln. Zum Testen wird der Regensensor auf eine Windschutzscheibe aufgebracht

Es ist Aufgabe der vorliegenden Erfindung, eine Prüfvorrichtung und ein Prüfverfahren zur Verfügung zu stellen, mit dem die Funktionsweise eines Regensensors unter definierten Bedingungen überprüft werden kann. Insbesondere ist es Aufgabe der vorliegenden Erfindung, eine Prüfvorrichtung und ein Verfahren zur Verfügung zu stellen, mit dem die Funktionsweise des Regensensors im dynamischen Betrieb geprüft werden kann.

Diese Aufgabe wird durch die Vorrichtung und das Verfahren zum Prüfen eines optischen Regensensors gemäß der unabhängigen Ansprüche gelöst. Weitere vorteilhafte Ausgestaltungen der Erfindung sind in den abhängigen Ansprüchen angegeben.

Gemäß einem ersten Aspekt der vorliegenden Erfindung ist eine Prüfvorrichtung zum Prüfen eines optischen Regensensors vorgesehen. Der optische Regensensor ist ausgebildet, um ein Maß von Feuchtigkeit durch Bestimmen eines reflektieren Anteils eines Lichtstrahls zu ermitteln. Die Prüfvorrichtung umfasst weiter eine Aufsetzeinrichtung, um den Regensensor während des Prüfvorgangs zu fixieren. Weiterhin ist insbesondere eine Prüfeinrichtung vorgesehen, die in dem Lichtstrahl anordbar ist, wobei die Prüfeinrichtung insbesondere einen Bereich aufweist, der gestaltet ist, um einen vorbestimmten Anteil des Lichtstrahls zu reflektieren.

Die Prüfvorrichtung gemäß der vorliegenden Erfindung hat den Vorteil, dass ein Regensensor in definierter Weise mithilfe einer Prüfeinrichtung geprüft werden kann. Mithilfe der Prüfeinrichtung wird der Sensor mit einem Bereich mit einem bestimmten optischen Reflexionsverhalten gekoppelt, so dass der reflektierte vorbestimmte Anteil des Lichtstrahls in vorbestimmter Weise beeinflusst wird. Die Messfähigkeit des Regensensors kann anhand dieses vorgegebenen optischen Verhaltens geprüft werden. Im Gegensatz zu bekannten Prüfvorrichtungen erhält man mit der erfindungsgemäßen Prüfvorrichtung reproduzierbare Ergebnisse, die eine objektive Bewertung der Funktionsweise des Regensensors ermöglichen. Ferner ermöglicht es die freie Wahl der Ausgestaltung des Bereichs der Prüfeinrichtung, der in dem Lichtstrahl angeordnet werden kann, die Bedingungen, mit denen der optische Regensensor geprüft wird, frei zu wählen.

Erfindungsgemäß sind die Aufsetzeinrichtung und die Prüfeinrichtung gegeneinander beweglich angeordnet.

Vorzugsweise weist die Prüfeinrichtung zumindest ein Reflexionselement auf, um einen Anteil des Lichtstrahls in den optischen Regensensor zu reflektieren. Zusätzlich oder alternativ kann die Prüfeinrichtung in einem Bereich ein Ablenkelement aufweisen, das gestaltet ist, um den Winkel einer Totalreflexion an einer Stelle der Prüfeinrichtung für den Lichtstrahl zu ändern. Insbesondere kann die Prüfeinrichtung dazu transparent ausgebildet sein und das Ablenkelement als eine noppenförmige Erhebung in dem Bereich auf einer Oberfläche der Prüfeinrichtung vorgesehen sein. Auf diese Weise lässt sich der optische Regensensor unter Bedingungen prüfen, die der Realität im Wesentlichen entsprechen, in dem mithilfe von noppenförmigen Erhebungen auf der Prüfeinrichtung Tropfen auf einer Windschutzscheibe nachgebildet werden, so dass das Reflexionsverhalten des Lichtstrahls in der Prüfeinrichtung im Wesentlichen dem realen Reflexionsverhalten des Lichtstrahls in der Windschutzscheibe, auf dessen Außenfläche sich Tropfen befinden, entspricht.

Vorzugsweise ist vorgesehen, dass die Prüfeinrichtung mehrere Bereiche mit jeweils unterschiedlichem Reflexionsverhalten aufweist, um einen aufgesetzten Regensensor bei unterschiedlichen Reflexionsverhalten zu überprüfen.

Gemäß einer bevorzugten Ausführungsform der Erfindung kann die Prüfeinrichtung als eine drehbare Prüfscheibe ausgebildet sein, die insbesondere axial verschiebbar ist. Die drehbare Prüfscheibe kann mehrere Bereiche mit unterschiedlichem Reflexionsverhalten aufweisen, so dass durch Drehen der Prüfscheibe der reflektierte Anteil des Lichtstrahls variiert wird. Insbesondere kann die Prüfscheibe einen Kalibrierbereich aufweisen, um den aufgesetzten Regensensor zu kalibrieren. Entsprechend einer Änderung eines durch den optischen Regensensor erfassten Messwertes kann festgestellt werden, ob der Regensensor ordnungsgemäß funktioniert. Die optionale axiale Verschiebbarkeit der Prüfeinrichtung (in Achsrichtung) ermöglicht, verschiedene Scheibendicken von Windschutzscheiben zu simulieren, auf die der zu überprüfenden Regensensor in der Endanwendung aufgesetzt wird. Um zwischen der Prüfeinrichtung und der Aufsetzeinrichtung möglichst keine Störung zumindest des reflektierten Anteils des Lichtstrahls zu erhalten, kann vorzugsweise vorgesehen sein, dass die Prüfeinrichtung zumindest teilweise in einer Immersionsflüssigkeit, insbesondere Silikonöl oder Glycerin, angeordnet ist.

Gemäß einer weiteren Ausführungsform der Erfindung kann die Aufsetzeinrichtung als eine zumindest teilweise transparente Scheibe ausgebildet sein. Insbesondere kann die Aufsitzeinrichtung mindestens zwei verschiedene Bereiche unterschiedlicher Transmission aufweisen, insbesondere einen getönten und einen nicht-getönten Bereich. Dies ermöglicht es, den Regensensor bei verschiedenen Scheibentransmissionen zu überprüfen, wie sie in der späteren Anwendung aufgrund unterschiedlicher Tönungen der Windschutzscheibe auftreten können.

Gemäß einem weiteren Aspekt der vorliegenden Erfindung ist ein Verfahren zum Prüfen eines optischen Regensensors vorgesehen, der ein Maß von Feuchtigkeit durch Bestimmen eines reflektierten Anteils eines Lichtstrahls ermittelt. Das Verfahren umfasst die Schritte des Fixierens des Regensensors, des Einbringens eines Bereiches einer Prüfeinrichtung in den Lichtstrahl, so dass ein vorbestimmter Anteil des Lichtstrahls auf dem Regensensor reflektiert wird und des Ermittelns eines Messwertes mithilfe des Regensensors.

Das erfindungsgemäße Verfahren ermöglicht es, Regensensoren mit einem reproduzierbaren Testverfahren, das eine objektive Bewertung der Funktionsfähigkeit des Regensensors ermöglicht, zu überprüfen. Das Verfahren gibt dem Regensensor eine reale Messsituation vor, d. h. das dynamische Verhalten des Regensensors ist reproduzierbar.

Vorzugsweise weist die Prüfeinrichtung mehrere Bereiche mit unterschiedlichen Reflexionszuständen auf, wobei die Prüfeinrichtung in dem Lichtstrahl so bewegt wird, dass die mehreren Bereiche durch eine sensitive Fläche des Regensensors bewegt wird, um mehrere Messwerte bei verschiedenen Reflexionszuständen zu ermitteln. Auf diese Weise kann der Regensensor bei verschiedenen Niederschlagsbedingungen geprüft werden.

Zum Prüfen des Regensensors wird vorzugsweise der ermittelte Messwert bzw. die ermittelten Messwerte mit einem oder mehreren Sollwerten verglichen, so dass durch Übereinstimmung oder Abweichung die Funktionsfähigkeit des Regensensors überprüft werden kann.

Bevorzugte Ausführungsformen der vorliegenden Erfindung werden nachfolgend anhand der beigefügten Zeichnungen näher erläutert. Es zeigen:
- Figur 1: eine Prüfvorrichtung gemäß einer ersten Ausfüh- rungsform der Erfindung;
- Figur 2: eine Prüfvorrichtung gemäß einer weiteren Ausfüh- rungsform der Erfindung;
- Figur 3: eine Draufsicht auf die Prüfscheibe der Ausfüh- rungsform der Figur 2;
- Figur 4: eine Draufsicht auf den Behälterboden der Ausfüh- rungsform der Figur 2;
- Figur 5: eine Draufsicht auf den Behälterboden und auf eine verschiebliche Prüfeinrichtung gemäß einer weiteren Ausführungsform der Erfindung;
- Figur 6: eine Prüfvorrichtung gemäß einer weiteren Ausfüh- rungsform der Erfindung; und
- Figur 7: ein Blockschaltbild eines Prüfsystems zur Durchfüh- rung des Prüfverfahrens gemäß einer bevorzugten Ausführungsform der Erfindung.

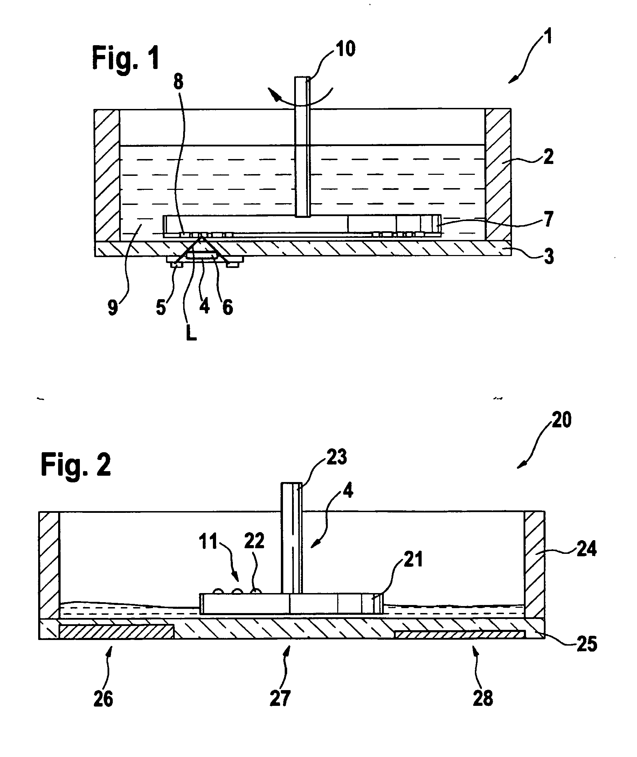

In Figur 1 ist eine Prüfvorrichtung gemäß einer ersten Ausführungsform der Erfindung dargestellt. Die Prüfvorrichtung 1 umfasst einen Behälter 2 mit einem zumindest teilweise transparenten Behälterboden 3. Ein zu prüfender optischer Regensensor 4 ist an der Unterseite des Behälterbodens 3 angebracht, z. B. mithilfe einer geeigneten Halterung 5 durch Kleben oder einer sonstigen Befestigungsart. Der optische Regensensor 4 umfasst eine Lichtquelle, z. B. in Form einer Laserdiode (nicht gezeigt) und einen Fotodetektor (nicht gezeigt). Die Lichtquelle koppelt einen Lichtstrahl in ein Kopplungselement (nicht gezeigt) des Regensensors ein, das den Lichtstrahl auf eine Grenzfläche richtet. An dieser Grenzfläche wird der Lichtstrahl unter anderem durch Totalreflexion auf den Fotodetektor reflektiert. Befindet sich Feuchtigkeit in Form von Beschlag oder Tröpfchen auf der Grenzfläche, an der der Lichtstrahl reflektiert wird, so wird der Grenzwinkel der Totalreflexion geändert, wodurch ein Teil des Lichts an der Fläche in die Umgebung ausgekoppelt wird und nur ein geringerer Anteil des von der Lichtquelle abgegebenen Lichtes in den Fotodetektor reflektiert wird. Durch die reduzierte Lichtstärke, die durch den Fotodetektor des Regensensors empfangen wird, kann also Feuchtigkeit auf der Fläche detektiert werden.

Damit der Lichtstrahl vor oder nach dem Auftreffen auf der Grenzfläche möglichst nicht an unerwünschten Grenzflächen gestreut oder ganz oder teilweise reflektiert wird, wird der Regensensor 4 an den Behälterboden gekoppelt, z. B. mithilfe eines Silikonkissens 6 an dem Behälterboden 3 befestigt, so dass der Lichtstrahl, der von der Lichtquelle des Regensensors 4 ausgesendet wird, möglichst verlustlos in den Behälterboden 3 eingekoppelt wird.

In dem Behälter 2 befindet sich eine Prüfscheibe 7, die an einer Drehachse 10 drehbeweglich aufgehängt ist und mit einem Antrieb (nicht gezeigt) bewegt werden kann. Die Prüfscheibe 7 ist vorzugsweise kreisförmig in Form eines Drehtellers ausgebildet, kann aber auch als andere Form, wie z. B. in Form eines Rechtecks ausgebildet sein. Zwischen der Oberseite des Behälterbodens 3 und der Prüfscheibe 7 befindet sich ein variabler Abstand. Die Unterseite der Prüfscheibe 7 ist mit Reflexionselementen 8 versehen, die insbesondere in Form einer Spiegelschicht ausgebildet sein können. Die Spiegelschicht ist z.B. durch eine Aluminiumbeschichtung ausgeführt und kann in verschiedenen Bereichen der Prüfscheibe 7 unterschiedlich ausgebildet sein. Die verschiedenen Bereiche, die vorzugsweise als Scheibensegmente ausgebildet sind, können Verspiegelungsmuster aufweisen, um unterschiedliche Reflexionsverhalten nachzubilden. Die Verspiegelungsmuster weisen insbesondere abwechselnd verspiegelte, teilverspiegelte und/oder nicht verspiegelte Abschnitte auf.

Um eine Reflexion des Lichtstrahls L an der Oberseite des Behälterbodens 3, z. B. aufgrund von Totalreflexion zu vermeiden, ist der Behälter 2 mit einer Immersionsflüssigkeit 9, wie beispielsweise Silikonöl, Glycerin und andere gefüllt. Der Behälter 2 ist mit einer Menge von Immersionsflüssigkeit 9 gefüllt, die ausreicht, dass zumindest die Reflexionselemente 8 von der Immersionsflüssigkeit 9 benetzt sind. Auf diese Weise wird vermieden, dass der Lichtstrahl zwischen der Oberseite des Behälterbodens 3 und den Reflexionselementen 8 eine Grenzfläche zwischen Medien verschiedener Brechungsindizes durchdringen muss, an der der Lichtstrahl abgelenkt werden würde. Auf diese Weise werden Grenzflächen vermieden, an denen der Lichtstrahl aufgrund von Totalreflexion abgelenkt bzw. abgeschwächt wird.

Die Reflexionselemente 8 sind in vordefinierter Weise auf der Prüfscheibe 7 angeordnet. Die Anordnung der Reflexionselemente 8 bestimmt den Anteil des Lichtstrahls L, der in der Prüfscheibe 7 reflektiert wird und auf den Fotodetektor des Regensensors 4 zurückgeworfen wird. Selbstverständlich kann die Prüfscheibe 7 auch einen Bereich aufweisen, der vollständig verspiegelt ist, so dass der Lichtstrahl L vollständig reflektiert wird.

Die Prüfscheibe 7 ist entlang ihrer Drehachse 10 (axial) variabel höhenverstellbar, so dass die Reflexionselemente 8 in unterschiedlichen Abständen von dem Regensensor 4 angeordnet werden können, um verschiedenen Dicken der Windschutzscheibe zu simulieren. Die Füllhöhe der Immersionsflüssigkeit 9 in dem Behälter ist so gewählt, dass bei jeder eingestellten Höhe der Prüfscheibe 7 die Reflexionselemente 8 von der Immersionsflüssigkeit 9 bedeckt bleiben.

Die Immersionsflüssigkeit 9 ist so gewählt, dass sie einen hohen Transmissionsgrad von vorzugsweise >95% aufweist, so dass der Transmissionsgrad der gesamten Prüfstrecke im Wesentlichen ausschließlich durch die Prüfscheibe 7 bzw. durch die darauf angeordneten Reflexionselemente 8 bestimmt wird.

In Figur 2 ist eine weitere Ausführungsform einer Prüfvorrichtung gemäß der Erfindung dargestellt. Die Prüfvorrichtung 20 unterscheidet sich von der Prüfvorrichtung der Figur 1 dadurch, dass als Prüfeinrichtung eine Prüfscheibe 21 vorgesehen ist, die im Wesentlichen transparent aus Glas oder Kunststoff ausgebildet ist. Auf der Oberseite der Prüfscheibe 21 befinden sich Ablenkelemente 22, die ähnlich wie die Reflexionselemente 8 der Ausführungsform der Figur 1 in einem bestimmten vorgegebenen Muster auf der Prüfscheibe 21 angeordnet sind. Die Prüfscheibe 21 ist um ihre Drehachse 23 drehbeweglich angeordnet und mithilfe eines Antriebs bewegbar, um in den für den Regensensor (in dieser Ausführungsform nicht dargestellt) relevanten Lichtstrahl verschiedene Reflexionsbereiche der Prüfscheibe 21 hineinzubewegen. Der Behälter 24 der Prüfvorrichtung 20 weist einen Behälterboden 25 auf, der verschiedene Bereiche 28 aufweist, wobei ein erster Bereich 26 eine starke Tönung, d. h. einen hohen Transmissionsverlust eines durchdringenden Lichtstrahls, der zweite Bereich 27 keine Tönung und ein dritter Bereich 28 eine geringe Tönung, d. h. einen geringen Transmissionsverlust für einen durchdringenden Lichtstrahls aufweist. Die Prüfscheibe 21 ist horizontal in dem Behälter 24 ebenfalls mithilfe des Antriebs beweglich, so dass die Prüfscheibe über einen der drei Bereiche 26, 27, 28 bewegt werden kann. Auf diese Weise kann eine Funktion eines Regensensors 4, der auf die Unterseite des Behälterbodens 25 in einem der drei Bereiche 26, 27, 28 aufgesetzt bzw. befestigt wird, für verschiedene Scheibentönungen überprüft werden. Dies ermöglicht es, die Funktionsfähigkeit des Regensensors bei einem späteren Einsatz auf getönten Windschutzscheiben entsprechend zu überprüfen.

Anstatt der horizontalen Verschiebung der Prüfscheibe kann alternativ bei feststehender Prüfscheibe auch der Behälter 24 in horizontaler Richtung verstellt werden.

Wie im ersten Ausführungsbeispiel ist die Prüfscheibe 21 höhenverstellbar ausgeführt, wobei der Abstand zwischen der Unterseite des Behälterbodens 25 und der Oberseite der Prüfscheibe 21 der simulierten Dicke der Windschutzscheibe entspricht.

Bei der Ausführungsform der Figur 2 befindet sich ebenfalls Immersionsflüssigkeit im Behälter 24, die wie zuvor einen im Wesentlichen gleichen optischen Brechungsindex aufweist, wie der Behälterboden 25 und die Prüfscheibe 21. Die Immersionsflüssigkeit sollte die Ablenkelemente 22 nicht benetzen, um den Ablenkeffekt des die Prüfscheibe 21 durchdringenden Lichtstrahls nicht zu beeinträchtigen. Anstelle von Ablenkelementen 22, die in Form von Tropfen auf der Oberseite der Prüfscheibe 21 angeordnet sind, können auch Vertiefungen oder ähnlich oder gleichwirkende Strukturen auf der Oberseite der Prüfscheibe 21 angeordnet sein, mit denen eine entsprechende Auskopplung des Lichtstrahls erreicht werden kann.

Die Ablenkelemente 22, die auf der Prüfscheibe 21 aufgebracht sind, sind vorzugsweise aus ausgehärteten Tropfen (z.B. aus Epoxidharz) ausgebildet, die den Winkel der Totalreflexion an der Grenzfläche, die durch die Oberseite der Prüfscheibe 21 gebildet wird, verändert und somit die Wirkung eines Wassertropfens auf der Oberseite der Prüfscheibe 21 nachbildet. Durch die daraus resultierte Veränderung des Winkels der Totalreflexion wird ein Teil des von dem zu prüfenden Regensensor emittierten Lichtstrahl nicht in den Fotodetektor des Regensensors zurückreflektiert, sondern wird in die Umgebung weggeleitet. Dies ermöglicht eine Simulation des Regensensors unter möglichst der Realität (Tropfen auf einer Außenfläche einer Windschutzscheibe) entsprechenden Bedingungen. Durch eine Drehung der Prüfscheibe 21 können verschiedene Bereiche über den Regensensor gefahren werden, so dass ein Wechsel der Dichte der Ablenkelemente 22 in dem Lichtstrahl des Regensensors erreicht werden kann, wodurch eine unterschiedliche Tropfenmenge auf einer Windschutzscheibe simuliert wird.

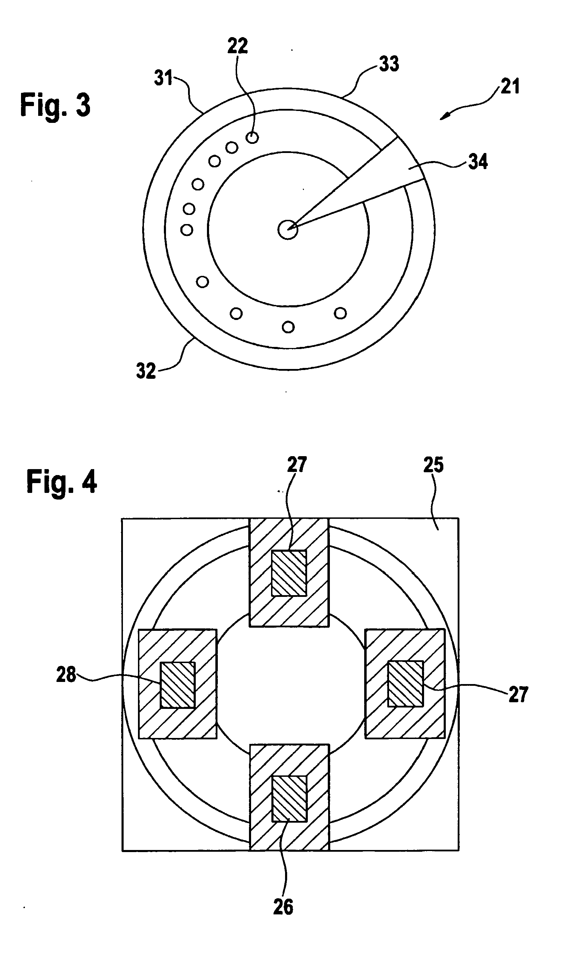

In Figur 3 ist eine Draufsicht auf eine Prüfscheibe 21 dargestellt, die verschiedene Segmente mit unterschiedlicher Strukturierung aufweist. Insbesondere können auch Reflexionselemente 8 in Form von Spiegelflächen wie bei der ersten Ausführungsform vorgesehen sein, bzw. Spiegelflächen und Ablenkelemente auf der Prüfscheibe 21 kombiniert angeordnet sein.

Die Prüfscheibe 21, die in Figur 3 dargestellt ist, weist Bereiche, vorzugsweise einen ersten Sektor 31 und einen zweiten Sektor 32, auf, die jeweils Ablenkelemente 22 mit unterschiedlicher Dichte aufweisen. Im gezeigten Beispiel weist das erste Segment 31 eine höhere Dichte von Ablenkelementen 22 auf, als das zweite Segment 32. In einem weiteren dritten Segment 33 weist die Prüfscheibe 21 keine Ablenkelemente auf, um die Funktion des Regensensors bei einer trockenen Windschutzscheibe zu simulieren. Weiterhin ist ein viertes Segment 34 vorgesehen, in dem die Prüfscheibe 21 geschwärzt ist, um einen Scheibenwischerdurchgang zu simulieren und die Auswirkung auf die Funktion des Regensensors zu überprüfen.

Im Falle von Reflexionselementen 8 können einer oder mehrere der Segmente mit Aussparungen zwischen verspiegelten Elementen versehen sein, die vorzugsweise teilverspiegelt sind, da Wassertropfen auf einer Windschutzscheibe eine bestimmte Restreflexion besitzen, die dadurch simuliert wird. Um eine solche Restreflexion in geeigneter Weise zu simulieren, sind die Aussparungen als teilverspiegelte Stellen vorgesehen, die beispielsweise eine Wabenstruktur aus kleineren vollständig verspiegelten und nicht verspiegelten Bereichen gebildet sind.

In Figur 4 ist eine Draufsicht auf den Behälterboden 25 der Ausführungsform der Figur 2 dargestellt. Man erkennt die verschiedenen Bereiche 26, 27, 28, in denen der Behälterboden 25 verschiedenartig getönt ist, um beim Überprüfen des Regensensors verschiedene Tönungen der Windschutzscheibe, auf denen der Regensensor im späteren Betrieb eingesetzt wird, zu simulieren.

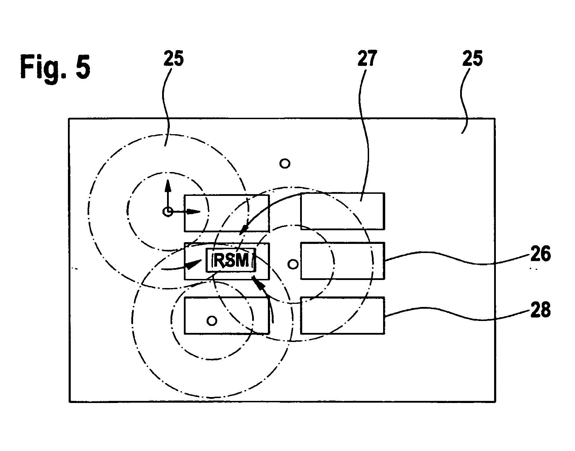

In Figur 5 ist eine Draufsicht auf die Prüfvorrichtung der Figur 2 dargestellt. Man erkennt, eine Alternative für eine weitere Anordnung verschiedener getönter Bereiche 26, 28 im Behälterboden 25, wobei innerhalb des Behälters 24 die Prüfscheibe 21 seitlich mithilfe des Antriebs verfahren werden kann, um einen Regensensor, der in einem der Bereiche an der Unterseite des Behälterbodens 5 angeordnet wird, zu prüfen, indem ein bestimmtes Muster von Ablenkelementen 22 auf der Prüfscheibe 21 aus verschiedenen Richtungen über den Regensensor bewegt werden können, so dass der Regensensor bei verschiedenen Betriebszuständen getestet werden kann.

Um den sensitiven Bereich eines zu überprüfenden Regensensors zu ermitteln, ist es vorteilhaft, dass die Prüfscheibe einen Sektor aufweist, auf dem lediglich ein einziges Ablenkelement 22 angeordnet ist. Dieses Ablenkelement 22 wird ein- oder mehrfach über die sensitive Fläche des Regensensors gefahren, so dass die Ausdehnung der sensitiven Fläche des Regensensors ermittelt werden kann. Die sensitive Fläche wird bestimmt, indem ermittelt wird, in welchen Positionen sich das Ablenkelement 22 auf die Messwerte, die mithilfe des Regensensors ermittelt werden, auswirkt.

Ein möglicher Ablauf eines Prüfverfahrens wird nachfolgend beschrieben. Zunächst wird die Prüfscheibe 21 über dem zu überprüfenden Regensensor so angeordnet, dass der Lichtstrahl, der von dem Regensensor emittiert wird, auf ein Ablenkelement (und/oder ein Reflexionselement) auf der Prüfscheibe trifft, von wo aus dieser ganz oder teilweise zu dem Fotodetektor des Regensensors reflektiert wird. In einem solchen definierten Zustand adaptiert sich das System auf den Zustand, der in der späteren Anwendung einer trockenen Windschutzscheibe entspricht. Zum Prüfen des Regensensors wird nun die Prüfscheibe 21 gedreht, so dass sich ein Tröpfchenmuster (nicht verspiegelte Bereiche der Prüfscheibe bzw. Sektoren mit Ablenkelementen) des nächsten Segments über die sensitive Fläche des Regensensors bewegt. In diesem Sektor wird der Lichtstrahl teilweise über die nicht oder teilweise verspiegelten Bereiche bzw. das Muster von Ablenkelementen 22 ausgekoppelt, so dass der Fotodetektor einen Einbruch der Lichtstärke detektiert. Die Größe des detektierten Signals ist durch die Ausgestaltung des Bereichs bestimmt. Das Muster der Ablenkelemente bzw. die teilweise verspiegelten Bereiche entsprechen hierbei vorzugsweise realen Regensituationen.

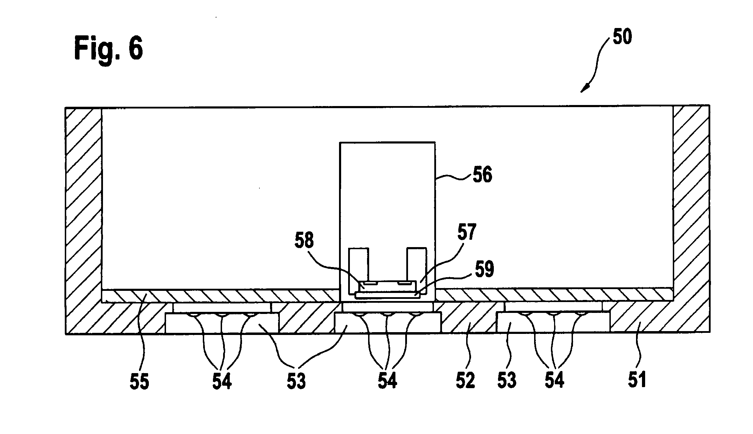

In Figur 6 ist eine weitere Prüfvorrichtung 50 gemäß einer weiteren Ausführungsform der Erfindung dargestellt, bei der ein im Wesentlichen feststehender Behälter 51 vorgesehen ist. Ein Behälterboden 52 des Behälters 51 weist ganz oder teilweise transparente Bereiche 53 auf, die mit Ablenkelementen 54 versehen sind, um eine mit Tropfen benetzte Windschutzscheibe zu simulieren. In dem Behälter befindet sich eine Immersionsflüssigkeit 55.

Es ist eine Haltevorrichtung 56 vorgesehen, die beispielsweise mithilfe eines Roboterarms (nicht gezeigt) innerhalb des Behälters 51 bewegbar ist. Die Haltevorrichtung 56 weist als Halterung eine Ausnehmung 57 auf, in der der zu prüfende Regensensor 58 eingesetzt und gehalten werden kann. Der Regensensor 58 wird vorzugsweise mit einer transparenten Scheibe 59 abgedeckt, so dass der Regensensor 58 optisch an die Scheibe 59 gekoppelt ist. Die Scheibe 59 dient dazu, dass der Regensensor 58 nicht direkt mit der Immersionsflüssigkeit 55 in Kontakt kommt. Dazu deckt die Scheibe 59 vorzugsweise die Ausnehmung 57 so vollständig ab, dass keine Immersionsflüssigkeit in die Ausnehmung 57 eindringen kann. Bei Bedarf kann eine entsprechende Dichtung vorgesehen sein.

Die Haltevorrichtung 56 wird mithilfe des Roboterarms in dem Behälter 51 auf bzw. über die transparenten Bereiche bewegt, so dass die sensitive Fläche des Regensensors 58 optisch mit der Scheibe 59 und der Immersionsflüssigkeit 55 gekoppelt ist. Durch das Verfahren der Halterungsvorrichtung 56 kann das statische Verhalten bzw. das dynamische Verhalten des Regensensors 58 überprüft werden.

Wie bei den anderen Ausführungsformen bereits beschrieben, können die transparenten Bereiche 53, bzw. die Scheibe 59 eine Tönung aufweisen, um eine getönte Windschutzscheibe zu simulieren. Weiterhin können die Ablenkelemente 54 sowohl durch transparente Erhebungen oder Vertiefungen an dem Behälterboden 52, vorgesehen sein. Alternativ oder zusätzlich können alle oder ein Teil der Bereiche 53 auch mit Reflexionselementen versehen sein. Durch eine Höhenverstellbarkeit der Haltevorrichtung 56 in dem Behälter 51 bzw. über eine Festlegung der Eintauchtiefe der Haltevorrichtung 56 in die Immersionsflüssigkeit 55 sind verschiedene Scheibendicken simulierbar. Das Prüfverfahren kann bei dieser Ausführungsform im Wesentlichen auf die gleiche Weise durchgeführt werden, wie bereits mit Bezug auf die zuvor beschriebenen Ausführungsformen erläutert worden ist.

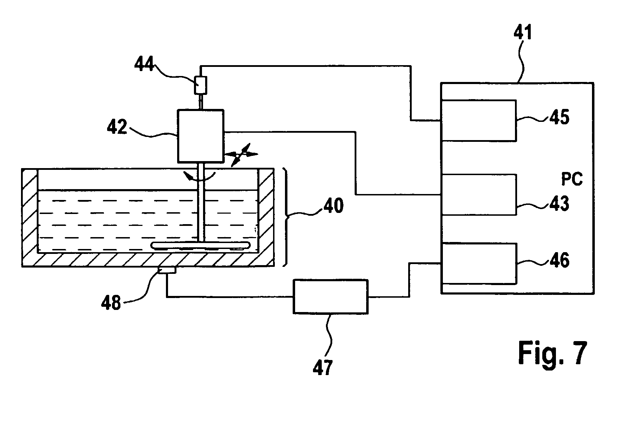

In Figur 7 ist ein Prüfsystem dargestellt, bei dem eine Prüfvorrichtung 40, wie sie zuvor in Verbindung mit den Ausführungsformen der Figur 1 bis 5 beschrieben wurde, mit einem Auswertesystem 41 verbunden. Das Auswertesystem 41 steuert die seitliche Bewegung und die Drehung der Drehscheibe der Prüfvorrichtung 40 mithilfe eines Antriebs 42 der über eine Motorschnittstelle 43 im Auswertesystem 41 angesteuert wird. Die Drehachse, die mit der Prüfscheibe verbunden ist, ist mit einem Lagesensor 44 verbunden, der die Lage der Drehscheibe an einen Lagedetektor 45 des Auswertesystems 41 übermittelt. Weiterhin ist eine Schnittstelle 46 für den Regensensor im Auswertesystem 41 vorgesehen, der z. B. über eine geeignete Busschnittstelle 47 mit dem Regensensor 48, der auf der Unterseite der Prüfvorrichtung 40 in einem Prüfbereich angeordnet ist, verbunden.

Ein Prüfen kann durchgeführt werden, indem zunächst, wie zuvor beschrieben, der Regensensor 48 in einem Prüfzustand überprüft wird, der z.B. einer trockenen Windschutzscheibe entspricht. Anschließend wird der Antrieb 42 mithilfe der Motorschnittstelle 43 so betrieben, dass über die sensitive Fläche des Regensensors ein Muster aus Reflexionselementen bzw. Ablenkelementen bewegt wird, um dynamisch Regen auf einer Windschutzscheibe zu simulieren. Die entsprechenden Messwerte werden über die Schnittstelle 46 in dem Auswertesystem 41 erfasst und beispielsweise mit Sollwerten verglichen, die den Messwerten für einen funktionsfähigen idealen Regensensor entsprechen. Bei exakter Übereinstimmung bzw. bei Übereinstimmung unter Berücksichtigung eines vorgegebenen Toleranzbereiches wird der Regensensor als ordnungsgemäß funktionsfähig erkannt oder nicht.

Zur Simulation eines Abschaltvorgangs für einen über das Auswertesystem 41 angesteuerten Scheibenwischer kann die Prüfscheibe ein Muster von Ablenkelementen 22 aufweisen, bei dem die Dichte der Ablenkelemente mit zunehmendem Winkelweg abnimmt, so dass das Verhalten des Regensensors bei einem nachlassenden Regen ermittelt werden kann.

## Patentansprüche

1. Prüfvorrichtung (1; 20; 40; 50) zum Prüfen eines optischen Regensensors (4), der ausgebildet ist, um ein Maß von Feuchtigkeit durch Bestimmen eines reflektierten Anteils eines Lichtstrahls zu ermitteln,
mit einer Aufsetzeinrichtung (3; 25; 56) zum Aufsetzen des Regensensors (4), und mit
einer Prüfeinrichtung (7; 21; 52), die in dem Lichtstrahl anordbar ist, wobei die Prüfeinrichtung (7; 21; 52) einen Bereich aufweist, der gestaltet ist, um einen vorbestimmten Anteil des Lichtstrahls zu reflektieren,
**dadurch gekennzeichnet, dass**
die Aufsetzeinrichtung (3; 25; 56) und die Prüfeinrichtung (7; 21; 52) gegeneinander beweglich angeordnet sind.

2. Prüfvorrichtung (1; 20; 40; 50) nach Anspruch 1, **dadurch gekennzeichnet, dass** die Prüfeinrichtung (7; 21; 52) in dem Bereich zumindest ein Reflexionselement (8) aufweist, um einen Anteil des Lichtstrahls in den optischen Regensensor (4) zu reflektieren.

3. Prüfvorrichtung (1; 20; 40; 50) nach einem der Ansprüche 1 oder 2, **dadurch gekennzeichnet, dass** die Prüfeinrichtung (7; 21; 52) in dem Bereich ein Ablenkelement (22; 54) aufweist, das gestaltet ist, um den Winkel einer Totalreflexion an einer Stelle der Prüfeinrichtung (7; 21; 52) für den Lichtstrahl zu ändern.

4. Prüfvorrichtung (1; 20; 40; 50) nach Anspruch 3, **dadurch gekennzeichnet, dass** die Prüfeinrichtung (7; 21; 52) transparent ausgebildet ist und das Ablenkelement (22) als eine noppenförmige Erhebung auf einer Oberfläche der Prüfeinrichtung (7; 21; 52) vorgesehen ist.

5. Prüfvorrichtung (1; 20; 40; 50) nach einem der Ansprüche 2 bis 4, **dadurch gekennzeichnet, dass** die Prüfeinrichtung (7; 21; 52) mehrere Bereiche mit jeweils unterschiedlichem Reflexionsverhalten aufweist, um einen aufgesetzten Regensensor (4) mit unterschiedlichen Reflexionszuständen zu prüfen.

6. Prüfvorrichtung (1; 20; 40; 50) nach einem der Ansprüche 1 bis 5, **dadurch gekennzeichnet, dass** die Prüfeinrichtung (7; 21) als eine drehbare Prüfscheibe ausgebildet ist, die insbesondere axial verschiebbar ist.

7. Prüfvorrichtung (1; 20; 40; 50) nach Anspruch 6, **dadurch gekennzeichnet, dass** die Prüfscheibe (7; 21) einen Kalibrierbereich aufweist.

8. Prüfvorrichtung (1; 20; 40; 50) nach einem der Ansprüche 1 bis 7, **dadurch gekennzeichnet, dass** die Prüfeinrichtung (7; 21) zumindest teilweise in einer Immersionsflüssigkeit (9), insbesondere Silikonöl oder Glycerin, angeordnet ist.

9. Prüfvorrichtung (1; 20; 40; 50) nach einem der Ansprüche 1 bis 8, **dadurch gekennzeichnet, dass** die Aufsetzeinrichtung (3; 25) als eine zumindest teilweise transparente Scheibe ausgebildet ist.

10. Prüfvorrichtung (1; 20; 40; 50) nach Anspruch 9, **dadurch gekennzeichnet, dass** die Aufsetzeinrichtung (25) mindestens zwei verschiedene Bereiche unterschiedlicher Transmission, insbesondere einen getönten und einen nichtgetönten Bereich aufweist.

11. Verfahren zum Prüfen eines optischen Regensensors (4), der ein Maß von Feuchtigkeit durch Bestimmen eines reflektierten Anteils eines Lichtstrahls ermittelt, mit folgenden Schritten:
- Fixieren des Regensensors (4) mit Hilfe einer Aufsetzeinrichtung (3; 25; 56);
- Einbringen eines Bereichs einer Prüfeinrichtung (7; 21; 52) in den Lichtstrahl, so dass ein vorbestimmter Anteil des Lichtstrahls auf den Regensensor (4) reflektiert wird;
- Ermitteln eines Messwertes mithilfe des Regensensors (4),
**dadurch gekennzeichnet, dass**
die Aufsetzeinrichtung (3; 25; 56) und die Prüfeinrichtung (7; 21; 52) gegeneinander bewegt werden.

12. Verfahren nach Anspruch 11, **dadurch gekennzeichnet, dass** die Prüfeinrichtung (7; 21) mehrere Bereiche (31; 32; 33; 34) mit unterschiedlichen Reflexionszuständen aufweist, wobei die Prüfeinrichtung (7; 21) in dem Lichtstrahl so bewegt wird, dass die mehreren Bereiche durch eine sensitive Fläche des Regensensors (4) bewegt werden, um mehrere Messwerte bei verschiedenen Reflexionszuständen zu ermitteln.

13. Verfahren nach einem der Ansprüche 11 oder 12, **dadurch gekennzeichnet, dass** zum Prüfen der Funktion des Regensensors (4) der ermittelte Messwert bzw. die ermittelten Messwerte mit einem oder mehreren Sollwerten verglichen werden.

## Claims

1. Test device (1; 20; 40; 50) for testing an optical rain sensor (4) which is designed to ascertain a measure of moisture by determining a reflected fraction of a light beam, having a mounting device (3; 25; 56) for mounting the rain sensor (4), and having a test unit (7; 21; 52) which can be arranged in the light beam, the test unit (7; 21; 52) having an area which is fashioned to reflect a predetermined fraction of the light beam, **characterized in that** the mounting device (3; 25; 56) and the test unit (7; 21; 52) are arranged to remove relative to one another.

2. Test device (1; 20; 40; 50) according to Claim 1, **characterized in that** in the area the test unit (7; 21; 52) has at least one reflection element (8) for reflecting a fraction of the light beam into the optical rain sensor (4).

3. Test device (1; 20; 40; 50) according to either of Claims 1 and 2, **characterized in that** in the area the test unit (7; 21; 52) has a deflection element (22; 54) which is fashioned to change the angle of total reflection for the light beam at a location of the test unit (7; 21; 52).

4. Test device (1; 20; 40; 50) according to Claim 3, **characterized in that** the test unit (7; 21; 52) is of transparent design, and the deflection element (22) is provided as a knob-shaped elevation on a surface of the test unit (7; 21; 52).

5. Test device (1; 20; 40; 50) according to one of Claims 2 to 4, **characterized in that** the test unit (7; 21; 52) has a plurality of areas each having a different reflection behaviour in order to test a mounted rain sensor (4) having different reflection states.

6. Test device (1; 20; 40; 50) according to one of Claims 1 to 5, **characterized in that** the test unit (7; 21) is designed as a rotatable test disc which is axially displaceable, in particular.

7. Test device (1; 20; 40; 50) according to Claim 6, **characterized in that** the test disc (7; 21) has a calibration area.

8. Test device (1; 20; 40; 50) according to one of Claims 1 to 7, **characterized in that** the test unit (7; 21) is arranged at least partially in an immersion liquid (9), particularly silicone oil or glycerine.

9. Test device (1; 20; 40; 50) according to one of Claims 1 to 8, **characterized in that** the mounting device (3; 25) is designed as an at least partially transparent disc.

10. Test device (1; 20; 40; 50) according to Claim 9, **characterized in that** the mounting device (25) has at least two different areas of differing transmission, particularly a tinted and an untinted area.

11. Method for testing an optical rain sensor (4) which ascertains a measure of moisture by determining a reflected fraction of a light beam, having the following steps:
- fixing the rain sensor (4) with the aid of a mounting device (3; 25; 56);
- introducing an area of a test unit (7; 21; 52) into the light beam such that a predetermined fraction of the light beam is reflected onto the rain sensor (4);
- determining a measured value with the aid of the rain sensor (4),
**characterized in that** the mounting device (3; 25; 56) and the test unit (7; 21; 52) are moved relative to one another.

12. Method according to Claim 11, **characterized in that** the test unit (7; 21) has a plurality of areas (31; 32; 33; 34) having different reflection states, the test unit (7; 21) being moved in the light beam such that the plurality of areas are moved by a sensitive surface of the rain sensor (4) in order to determine a plurality of measured values for various reflection states.

13. Method according to either of Claims 11 and 12, **characterized in that** the determined measured value or the determined measured values is/are compared with one or more desired values in order to test the functioning of the rain sensor (4).

## Revendications

1. Appareil de contrôle (1 ; 20 ; 40 ; 50) pour contrôler un détecteur de pluie optique (4), lequel est configuré pour déterminer un indice d'humidité en déterminant une part réfléchie d'un rayon lumineux, comprenant un dispositif d'accueil (3 ; 25 ; 56) pour y poser le détecteur de pluie (4) et comprenant un dispositif de contrôle (7 ; 21 ; 52) qui peut être disposé dans le rayon lumineux, le dispositif de contrôle (7 ; 21 ; 52) présentant une zone qui est configurée pour réfléchir une part prédéfinie du rayon lumineux,
**caractérisé en ce que**
le dispositif d'accueil (3 ; 25 ; 56) et le dispositif de contrôle (7 ; 21 ; 52) sont mobiles l'un par rapport à l'autre.

2. Appareil de contrôle (1 ; 20 ; 40 ; 50) selon la revendication 1, **caractérisé en ce que** le dispositif de contrôle (7 ; 21 ; 52) présente dans la zone au moins un élément réfléchissant (8) pour réfléchir une part du rayon lumineux dans le détecteur de pluie optique (4).

3. Appareil de contrôle (1 ; 20 ; 40 ; 50) selon l'une des revendications 1 ou 2, **caractérisé en ce que** le dispositif de contrôle (7 ; 21 ; 52) présente dans la zone un élément de déviation (22 ; 54) qui est configuré pour modifier l'angle d'une réflexion totale du rayon lumineux à un endroit du dispositif de contrôle (7 ; 21 ; 52).

4. Appareil de contrôle (1 ; 20 ; 40 ; 50) selon la revendication 3, **caractérisé en ce que** le dispositif de contrôle (7 ; 21 ; 52) est réalisé transparent et l'élément de déviation (22) est prévu sous la forme d'une élévation en forme de bouton sur une surface du dispositif de contrôle (7 ; 21 ; 52).

5. Appareil de contrôle (1 ; 20 ; 40 ; 50) selon l'une des revendications 2 à 4, **caractérisé en ce que** le dispositif de contrôle (7 ; 21 ; 52) présente plusieurs zones ayant des comportements de réflexion à chaque fois différents afin de contrôler un détecteur de pluie (4) qui y est posé avec des états de réflexion différents.

6. Appareil de contrôle (1 ; 20 ; 40 ; 50) selon l'une des revendications 1 à 5, **caractérisé en ce que** le dispositif de contrôle (7 ; 21) est réalisé sous la forme d'un disque de contrôle rotatif, lequel peut notamment être déplacé dans le sens axial.

7. Appareil de contrôle (1 ; 20 ; 40 ; 50) selon la revendication 6, **caractérisé en ce que** le disque de contrôle (7 ; 21) présente une zone de calibrage.

8. Appareil de contrôle (1 ; 20 ; 40 ; 50) selon l'une des revendications 1 à 7, **caractérisé en ce que** le dispositif de contrôle (7 ; 21) est au moins partiellement disposé dans un liquide d'immersion (9), notamment de l'huile de silicone ou de la glycérine.

9. Appareil de contrôle (1 ; 20 ; 40 ; 50) selon l'une des revendications 1 à 8, **caractérisé en ce que** le dispositif d'accueil (3 ; 25) est réalisé sous la forme d'un disque au moins partiellement transparent.

10. Appareil de contrôle (1 ; 20 ; 40 ; 50) selon la revendication 9, **caractérisé en ce que** le dispositif d'accueil (25) présente au moins deux zones distinctes ayant des transmissions différentes, notamment une zone teintée et une zone non teintée.

11. Procédé de contrôle pour contrôler un détecteur de pluie optique (4), lequel détermine un indice d'humidité en déterminant une part réfléchie d'un rayon lumineux, comprenant les étapes suivantes :
- fixation du détecteur de pluie (4) à l'aide d'un dispositif d'accueil (3 ; 25 ; 56) ;
- introduction d'une zone d'un dispositif de contrôle (7 ; 21 ; 52) dans le rayon lumineux de sorte qu'une part prédéfinie du rayon lumineux soit réfléchie sur le détecteur de pluie (4) ;
- détermination d'une valeur mesurée à l'aide du détecteur de pluie (4) ;
**caractérisé en ce que**
le dispositif d'accueil (3 ; 25 ; 56) et le dispositif de contrôle (7 ; 21 ; 52) sont déplacés l'un par rapport à l'autre.

12. Procédé selon la revendication 11, **caractérisé en ce que** le dispositif de contrôle (7 ; 21) présente plusieurs zones (31 ; 32 ; 33 ; 34) ayant des états de réflexion différents, le dispositif de contrôle (7 ; 21) étant déplacé dans le rayon lumineux de telle sorte que lesdites plusieurs zones sont déplacées à travers une surface sensible du détecteur de pluie (4) afin de déterminer plusieurs valeurs mesurées aux différents états de réflexion.

13. Procédé selon l'une des revendications 11 ou 12, **caractérisé en ce que** pour contrôler le fonctionnement du détecteur de pluie (4), la valeur mesurée déterminée ou les valeurs mesurées déterminées sont comparées avec une ou plusieurs valeurs de consigne.
